(19) **Europäisches Patentamt** / **European Patent Office** / **Office européen des brevets**

(11) **EP 2 469 361 B1**

(12) **EUROPEAN PATENT SPECIFICATION**

(45) Date of publication and mention
of the grant of the patent:
**20.07.2016 Bulletin 2016/29**

(21) Application number: **09848363.9**

(22) Date of filing: **14.10.2009**

(51) Int Cl.:
***G04G 7/00*** (2006.01)

(86) International application number:
**PCT/CN2009/001141**

(87) International publication number:
**WO 2011/020222 (24.02.2011 Gazette 2011/08)**

(54) **METHOD FOR UNDERWATER TIME SERVICE AND SYNCHRONIZATION AND SYSTEM THEREOF**

VERFAHREN FÜR UNTERWASSERZEITDIENST UND SYNCHRONISATION SOWIE SYSTEM DAFÜR

PROCÉDÉ PERMETTANT UNE SYNCHRONISATION ET UN SERVICE D'HEURE SUBAQUATIQUES ET SYSTÈME ASSOCIÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.08.2009 CN 200910090554**

(43) Date of publication of application:
**27.06.2012 Bulletin 2012/26**

(73) Proprietors:
- **Institute Of Acoustics, Chinese Academy Of Science**
  **Beijing 100190 (CN)**
- **Telecom Bretagne**
  **29238 Brest cedex 3 (FR)**

(72) Inventors:
- **WANG, Haibin**
  **Beijing 100190 (CN)**
- **WANG, Jun**
  **Beijing 100190 (CN)**
- **WU, Lixin**
  **Beijing 100190 (CN)**
- **AISSA EL BEY, Abdeldjalil**
  **29238 Brest cedex 3 (FR)**
- **PYNDIAH, Ramesh**
  **29238 Brest cedex 3 (FR)**

(74) Representative: **Hoarton, Lloyd Douglas Charles et al**
**Forresters**
**Skygarden**
**Erika-Mann-Strasse 11**
**80636 München (DE)**

(56) References cited:
**WO-A1-2007/088360      CN-A- 1 299 063**
**CN-A- 101 409 738      JP-A- 2007 180 999**
**US-A- 5 894 450      US-A1- 2005 219 950**
**US-A1- 2009 160 699**

- **Mathias Fink ET AL: "Acoustic time-reversal mirrors", Inverse Problems, 1 February 2001 (2001-02-01), page R1, XP055208925, DOI: 10.1088/0266-5611/17/1/201 Retrieved from the Internet: URL:http://iopscience.iop.org/0266-5611/17/1/201 [retrieved on 2015-08-21]**
- **AARON M THODE ET AL: "A Portable Matched-Field Processing System Using Passive Acoustic Time Synchronization", IEEE JOURNAL OF OCEANIC ENGINEERING, IEEE SERVICE CENTER, PISCATAWAY, NJ, US, vol. 31, no. 3, 1 July 2006 (2006-07-01), pages 696-710, XP011163847, ISSN: 0364-9059, DOI: 10.1109/JOE.2006.880431**

**Description**

**Field of the invention**

The present invention relates general to underwater acoustic communications, and particularly relates to an underwater timing and synchronizing method and system by means of acoustic information interaction.

**Background of the invention**

An accurate time reference is very important to many underwater application systems. In underwater acoustic communication networks, an accurate time reference is the basis of system synchronizing. In the fields of data collection in ocean environment, environment monitoring and underwater exploration activities, an accurate time reference is the guarantee of data effectiveness. In underwater navigation and positioning system, an accurate time reference is one of the critical factors affecting the accuracy of positioning. However, there are still some shortcomings in existing techniques for real time underwater timing and synchronizing.

Because of high frequency electromagnetic signal's prompt attenuation in sea water, it is impossible for it to propagate for a long distance in sea water. So, unfortunately, conventional radio timing service fails to work well underwater. In general, there are mainly three methods to obtain an accurate time reference.

(1) Calibrating clock by GPS or radio. This is the most precise method among all. In this case, however, underwater base stations usually make use of buoys ascending above the surface of the sea to get calibrated. So this system may be destroyed by modem fishing industry (trawling) and other surface vessels. In regard to underwater mobile platforms, they need to frequently float upward to the surface of the sea to get calibrated at the cost of interrupting their ongoing task.

(2) Utilizing high-stability frequency standard for timekeeping. Underwater systems generally use TCXO, OCXO and atomic clock, etc. to keep real time. This can overcome some disadvantages of the first method. But it still has two main limits. In general, the higher the frequency stability accuracy of a system is, the bigger the size and power consumption thereof is. Currently underwater fixed platform mainly uses their own battery to supply power, which is very limited, so there is a prominent contradiction between the rising demand for long-term high-precision time reference and the limited power supply. In addition, the time errors in this way are cumulative, so underwater systems must also be calibrated by other means after working for long time.

(3) Using underwater acoustic techniques to provide timing. This method needs a number of base stations acting as servers with precise time references and locations. The underwater platforms acts as clients, which need time calibration, exchange time information with the servers through underwater acoustic path. Then time error of the clock of clients can be measured, and thus the timing and synchronizing tasks are fulfilled.

There are two modes of underwater acoustic timing and synchronizing (UWATS) systems, one is multi-base station mode and the other is point to point (P2P) mode.

Most of underwater navigation and positioning systems use multi-base station mode of underwater acoustic timing and synchronizing. They generally employ classical acoustic navigation techniques (LBL, SBL, etc.) to realize time calibration at the same time of getting precise position of clients. In this mode, accurate measurements of equivalent sound velocity and positions of servers are required.

P2P mode is more suitable for time calibration operations between a shore-based station (server) and an underwater base station (client). Timing and synchronizing can be typically achieved through measuring Time-of-Flight (TOF) of the acoustic timing signals without measuring sound velocity and position of server. But the accuracy of this mode may be influenced by multi-path and fluctuation effects of underwater acoustic paths.

The present invention is mainly based on P2P mode. Conventional P2P timing and synchronizing methods mainly include two modes: one is one-way timing method', the other is two-way timing method.

One-way timing method requires previous determination of propagation time $\Delta t$ of path between a server and a client, and assumes the propagation time $\Delta t$ constant. The server transmits timing signal to the client to calibrate the clock of the client. Assuming the transmission time is $t_{ss}$, and the time of the client's internal clock when the client receives the signal from the server is $t_{cr}$, then the error of the clock is:

$$e = t_{cr} - (t_{ss} + \Delta t)$$

Accordingly, it is possible to calibrate the clock of the client. This method of timing is simple to realize, without requiring the client to send signal, which can be used under the conditions of hydrological stability, such as in deep or shallow isothermal layer and so on; but in time-varying underwater acoustic communication paths, this method is not suitable due to great errors. In short, accuracy of this one-way timing method is low. To improve the accuracy of timing, two-way timing method is required.

The mode of two-way timing can be used for the timing of time-varying path, which applies "request-responsive" mode. A client requiring clock calibration transmits a request signal to a server at time $t_{cs}$, and the server receives the signal at time $t_{cs}$. After processing the signal, the server sends back a responsive signal to the client at time $t_{ss}$, and sends $t_{sr}$ and $t_{ss}$ to the client through underwater acoustic communication. The client receives the responsive signal at time $t_{cs}$, then the error of the clock of the client is:

$$e = t_{cr} - \{ t_{ss} + [(t_{cr} - t_{cs}) - (t_{ss} - t_{sr})]/2 \}$$

Accordingly, it is possible to calibrate the clock of the client. This approach assumes that the state of the path does not change during the process of signals transmitting and receiving in two ways, that is to say, it takes the same time for two-way propagation are equal. Since the time for transmitting and receiving of the signals in two ways is short, it is easy to meet this assumption in practice.

By whatever means, it is absolutely necessary to accurately measure the arrival of acoustic signal. However, as we all know, multi-path propagation and random phase fluctuations in the ocean have brought great difficulties to accurate measurement of the arrival of acoustic signals.

Time Reversal Mirror (TRM) technique is to achieve signal focusing by use of self-path matching techniques. To be more detailed, according to this technique, after the sensor array receives time-domain signals sent by a sound source, the signals are subject to time reversing, and then being sent out, that is to say, signals arriving first are sent out last and signals arriving last are sent out first. This technology has good focusing property of space and time, through which signals from the sound source can be reconstructed. Although time-reversal mirror technology brings about good focusing property of space and time, there has never disclosed any contents as to how to utilize the time reversal mirror technology for timing and synchronizing.

US 5 894 450 discloses an oceanographic sampling system includes two or more underwater vehicles disposed in an array and an array controller for controlling the array of underwater vehicles as data is acquired.

US 2005/219950 discloses an apparatus and method for determining range and bearing using time-stamped messaging.

M. firk and C. Mada; "Acoustic time reversal mirrors", inverse problems, vol. 17, 2001, disclose general details of the acoustic time-reversal concept, including underwater.

## Summary of the invention

To overcome the shortcomings of existing technology, the present invention proposes an underwater timing and synchronizing method and system, aiming to solve the defect that accuracy of timing and synchronizing is affected by acoustic multi-path problem and ups and downs effect, thus effectively improving accuracy of timing and synchronizing process, and reducing complexity of timing and synchronizing system.

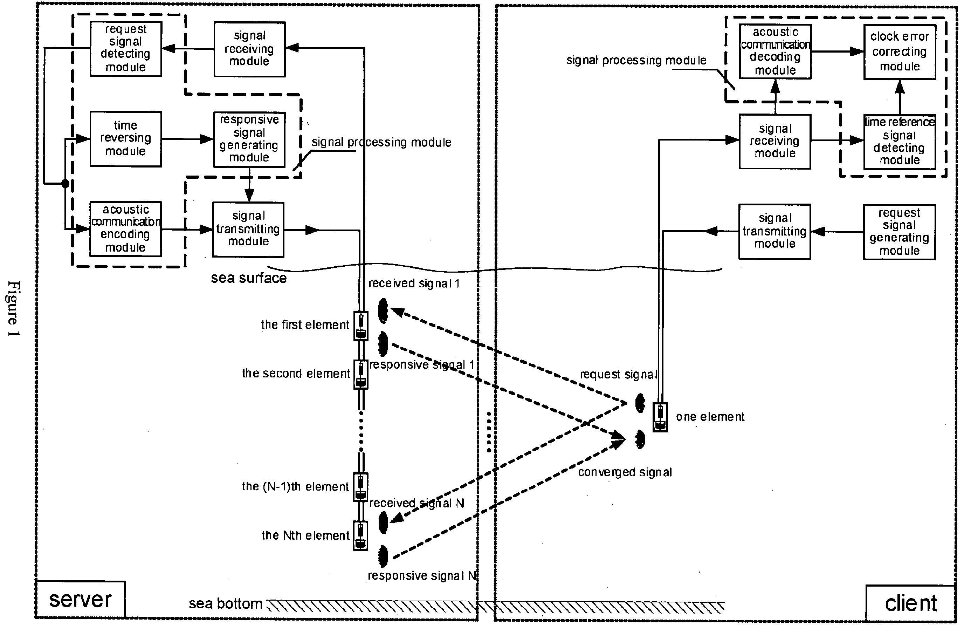

Time-reversal mirror is a technique that has good focusing property of space and time, and appropriate use of the principle of time-reversal mirror can reduce timing error due to multi-path problem and phase fluctuations. Based on this, the present invention discloses an underwater timing and synchronizing method and system, which is called a real-time timing method based on time-reversal mirror principle (Time-Reversal Mirror Real Timing, referred to as TRMRT), the method realizes timing and synchronizing by underwater acoustic information interaction between a base station server providing an accurate time reference and an underwater platform client requiring time calibration. As shown in Figure 1, the client equipment is composed of a dry side and a wet side, the dry side mainly includes modules for transmitting, receiving and processing signals, the wet side is a one-element transceiver; the server equipment is also composed of a dry side and a wet side, the dry side mainly includes modules for transmitting, receiving and processing signals, the wet side is a vertically arranged multi-element transceiver array.

The present invention provides a method and apparatus as claimed in claims 1 and 6, respectively.

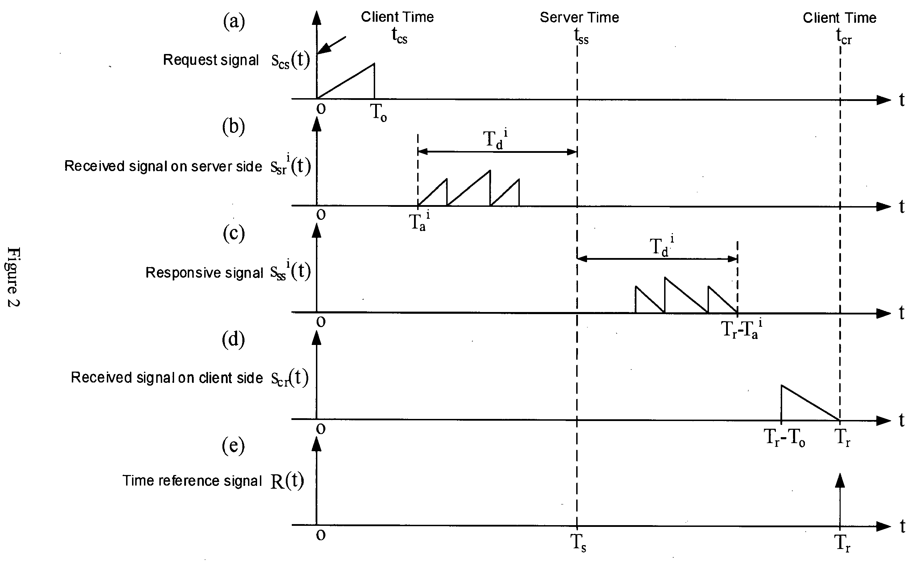

Figure 2 is a schematic diagram based on the principle of the present invention. As shown in Figure 2, according to the TRMRT method and system, it is necessary to establish a unified time coordinate system, and the transmission time of the request signal in step (a) corresponds to the origin of the unified time coordinate system. In the unified coordinate system, five signals are considered. First, the request signal $S_{cs}(t)$ sent by the client in step (a); second, the signal $S_{sr}^{i}(t)$ received by the $i^{th}$ element of the server in step (b), which is the resulted multi-path signal after being propagated; third, the responsive signal $S_{ss}^i(t)$ sent by the $i^{th}$ element of the server in step (c); fourth, the signal $S_{cr}(t)$ received by the client in step (d), which is the resulted signal after multi-path interference has been suppressed; fifth, the time reference signal $R(t)$ in step (d).

The above step (b) comprises:

(b1) said base station server by a vertically laid multi-element transceiver array receiving multi-path signal $S_{sr}^i(t)$ after the request signal $S_{cs}(t)$ being propagated, $i$ = 1,2,..., $N$, $N$ is the number of elements of the array on the base station server;

(b2) in the unified time coordinate system, the base station server aligning the transmission start time of the responsive signals of all the paths to $T_s$ by delaying for an appropriate time $T_d^i$, based on the arrival time $T_a^i$ of the received signals, wherein, the time length of $T_d^i$ is greater than the duration of the multi-path structure of the received signal $S_{sr}^i(t)$;

$$T_s = T_a^i + T_d^i \qquad (1)$$

(b3) carrying out time reversal processing of the received signal $S_{sr}^i(t)$ to obtain the i-th path's responsive signal $S_{ss}^i(t)$ with $T_s$ being used as the start time;

$$S_{ss}^i(t) = S_{sr}^i(T_r - t) \qquad (2)$$

wherein, $T_r = 2T_s$.

The above step (c) comprises:

(c1) at the time of $T_s$, all the paths of the base station server performing gain control processing for the responsive signal $S_{ss}^i(t)$, and then sending it back to the client;

(c2) the base station server reading and recording the local reference clock time $t_{ss}$ corresponding to the transmission time of the responsive signal, code-modulating *the $t_{ss}$* to obtain the communication signal, and then sending the communication signal to the client by means of acoustic communication.

The above step (d) comprises:

(d1) the client performing convolution operation on signal $S_{cr}(t)$, which is obtained by converging the multi-path responsive signals $S_{ss}^i(t)$ to the client after being propagated, and the original request signal $S_{cs}(t)$, to obtain the time reference signal $R(t)$,

$$R(t) = S_{cs}(t) \otimes S_{cr}(t) \qquad (3)$$

and then determining the end time $T_r$ of the timing process based on the position of the peak of the signal $R(t)$,

(d2) the client reading and recording the local clock time $t_{cr}$ corresponding to the end time $T_r$, in addition, an acoustic communication equipment of the client demodulating the transmission time $t_{ss}$ of the responsive signal from the base station server, and then calculating the clock error of the client by considering the transmission time $t_{cs}$ of the request signal from the client,

$$e = (t_{cs} + t_{cr})/2 - t_{ss} \qquad (4)$$

thereby realizing the timing and synchronizing to the client.

The request signal is in the form of a wide-band acoustic signal because its autocorrelation function has the features of δ-function, with a high time resolution, which is beneficial to improve the accuracy of timing.

The invention also discloses an underwater timing and synchronizing system, wherein acoustic information interaction between a base station server capable of providing an accurate time reference and an underwater platform client requiring accurate time calibration, thereby realizing underwater timing and synchronizing, and wherein:

the client is composed of a dry side and a wet side, the wet side is a one-element transceiver having the functions of sending and receiving signals; the dry side including:

a local clock, for reading local time $t_{cs}$ corresponding to the transmission time of a request signal and local time $t_{cr}$ corresponding to the position of the peak of a time reference signal;

a request signal generating module, for generating a request signal for timing and synchronizing, and outputting the request signal to a signal transmitting module;

a signal transmitting module, for transmitting the request signal to the base station server by the one-element transceiver;

a signal receiving module, for receiving a responsive signal and a communication signal sent from the base station server by the one-element transceiver and outputting the received signals to a signal processing module;

a signal processing module, for convoluting the received responsive signal and the original request signal to obtain the time reference signal, and accurately measuring the end time of the timing and synchronizing processing, then calculating a clock error of the client using the demodulated transmission time of the responsive signal from the base station server to realize timing and synchronizing to the client;

the base station server is composed of a dry side and a wet side, the wet side is a vertically arranged multi-element transceiver array;

the dry side including:

a reference clock, for providing an accurate reference time;

a signal receiving module, for receiving multi-path signal $S_{sr}^{i}(t)$ after said request signal $S_{cs}(t)$ being propagated by each element of the multi-element transceiver array, $i = 1,2,...,N$, $N$ is the number of elements of the array of the base station server;

a signal processing module, for performing time reversal processing of the request signal received by the base station server to obtain the responsive signal, and for code modulating the transmission time of the responsive signal to obtain the communication signal;

a signal transmitting module, for transmitting the responsive signal and the communication signal to the client by means of the multi-element transceiver array.

The signal processing module of the dry side of the base station server includes:

a request signal detecting module, for slide-correlating the multi-path signal $S_{sr}^{i}(t)$ which is outputted from the signal receiving module of the base station server with the original request signal, to determine whether there exists the request signal sent by the client in the received signal in each path;

a time reversing module, for aligning the transmission start time of the responsive signal of all the paths to $T_s$ by delaying for an appropriate time $T_d^{i}$ of the arrival $T_a^{i}$ of the received signal,

$$T_s = T_a^{i} + T_d^{i}$$

Wherein, the length of $T_d^{i}$ is greater than the duration of the received signal of multi-path structure; performing time reversal processing of the received signal $S_{sr}^{i}(t)$ of each path, with $T_s$ being set as the transmission start time of the responsive signal, to obtain the responsive signal $S_{ss}^{i}(t)$ of the i-th path in a unified time coordinate system,

$$S_{ss}^{i}(t) = S_{sr}^{i}(T_r - t)$$

wherein, $T_r = 2T_s$ ;

a responsive signal generating module, for carrying out gain control processing of the time reversed signal of each path to obtain the responsive signal of each path, and for outputting the responsive signal of each path to the signal transmitting module of the dry side of the server;

an acoustic communication coding module, for code-modulating the information about the transmission time $t_{ss}$ of the responsive signal to obtain a communication signal, and for outputting the communication signal to the signal transmitting module of the dry side of the server.

The signal processing module of the client side includes:

a time reference signal detecting module, for detecting the responsive signal sent back from the server, by means of performing sliding convolution of the original request signal and the received responsive signal to detect whether there exists the responsive signal sent back by the server and obtain a time reference signal $R(t)$ ;

$$R(t) = S_{cs}(t) \otimes S_{cr}(t) ;$$

an acoustic communication decoding module, for demodulating the transmission time $t_{ss}$ of the responsive signal sent from the communication signal from the server;

a clock error correcting module, for calculating the error of the clock of the client;

$$e = (t_{cs} + t_{cr}) / 2 - t_{ss}$$

The request signal is in the form of a broadband acoustic signal.

The present invention lies in the following facts: for the client, since the request signal is transmitted from the origin of the unified coordinate system, the end time of timing process is $T_r$ after receiving the responsive signal and making signal processing, thus the duration of the whole timing process is $T_r$, the midpoint time of the timing process being $T_r/2$. According to function(2), it is known that the midpoint time $T_r/2$ is exactly the transmission time $T_s$ of the responsive signal sent from the server, which corresponds to accurate reference time $t_{ss}$ ; on the other hand, the transmission time of the request signal read from the clock of the client is $t_{cs}$, the arrival of the responsive signal is $t_{cr}$, so the midpoint of the timing process with an error is $(t_{cs} + t_{cr})/2$, after subtracting $t_{ss}$, the clock error of the client is obtained.

In addition, from formula (2) and (3), it can be known that,

$$R(t) = S_{cs}(t) \otimes \sum_{i=1}^{N} [S_{cs}(T_r - t) \otimes g_{-t}(r_s^i, z_s^i; r_c, z_c)] \otimes g_t(r_c, z_c; r_s^i, z_s^i)$$
$$= [S_{cs}(t) \otimes S_{cs}(T_r - t)] \otimes [\sum_{i=1}^{N} g_{-t}(r_s^i, z_s^i; r_c, z_c) \otimes g_t(r_c, z_c; r_s^i, z_s^i)]$$

wherein, the Green's function $g_t(r_s^i, z_s^i; r_c, z_c)$ of the i-th path from the client to the server is path impulse response of the request signal propagation, the Green's function $g_t(r_c, z_c; r_s^i, z_s^i)$ of the i-th path of the server to the client is path impulse response of the responsive signal propagation.

Assuming $R_s(t) = S_{cs}(t) \otimes S_{cs}(T_r\text{-}t)$, since $S_{cs}(t)$ is a broadband signal, $R_s(t)$ is actually the autocorrelation function of $S_{cs}(t)$, with similar single-peak feature of the $\delta$ function.

Assuming $R_g(t) = \sum_{i=1}^{N} g_{-t}(r_s^i, z_s^i; r_c, z_c) \otimes g_t(r_c, z_c; r_s^i, z_s^i)$ , from the reciprocity principle of the acoustic propagation it is known *that Rg (t)* is the average of impulse response autocorrelation function of multiple paths, with similar single-peak feature of the $\delta$ function too.

So, $R(t)=R_s(t) \otimes R_g(t)$ is also a single-peak signal with high time resolution, its peak appearing at time $T_r$. Since the multi-path interference has been effectively suppressed, it (the peak) can act as an accurate time mark, thus the end time $T_r$ of the timing process can be accurately determined from the peak position of $R(t)$ .

The process for time synchronizing according to the present invention is similar to the process for timing, and the main differences only include: for timing, the server clock is reference clock, its travel time is accurate UTC (Universal Time Coordinated) time; and for time synchronizing, the travel time of the server clock needs not to be UTC time, the result of time synchronizing is to make the travel time of client's clock and the server's clock identical, and if the server's clock has an error relative to UTC time, the client's clock can go with the same error.

The present method and system has the following two advantages:

(1) On the client side, since time-reversal mirror suppresses multi-path problem, thus greatly reducing the multi-path interference and improving the accuracy of timing;
(2) On the server side, the present invention avoids the complex processing of multi-path signal, and so is greatly simplified compared with conventional acoustic timing and synchronizing systems.

**Brief description of the drawings**

Figure 1 shows a time reversal mirror real-time timing and synchronizing method and system;
Figure 2 shows the principle of time reversal mirror real-time timing and synchronizing method;
Figure 3 is a block graph of the present invention being applied to acoustic timing processing;
Figure 4 is a flow chart of the present invention being applied to acoustic timing processing;
Figure 5 show the autocorrelation function of timing request signal;
Figure 6 is applying analog path impulse response function in embodiment;
Figure 7 is server-side two array elements relevant test results and details comparison of time scale signal on the client side;
Figure 8 is time-reversal mirror timing course diagram in embodiment.

**Detailed description of the invention**

Hereafter, the present invention will be described in details referring to the figures and examples.

In the following embodiment, the present invention is applied to acoustic timing service from a server to a client, wherein the server provides a time reference, whose clock providing accurate UTC time; whereas the client's local clock is subject to travel time error, which needs calibrating through information interaction with the server by acoustic means.

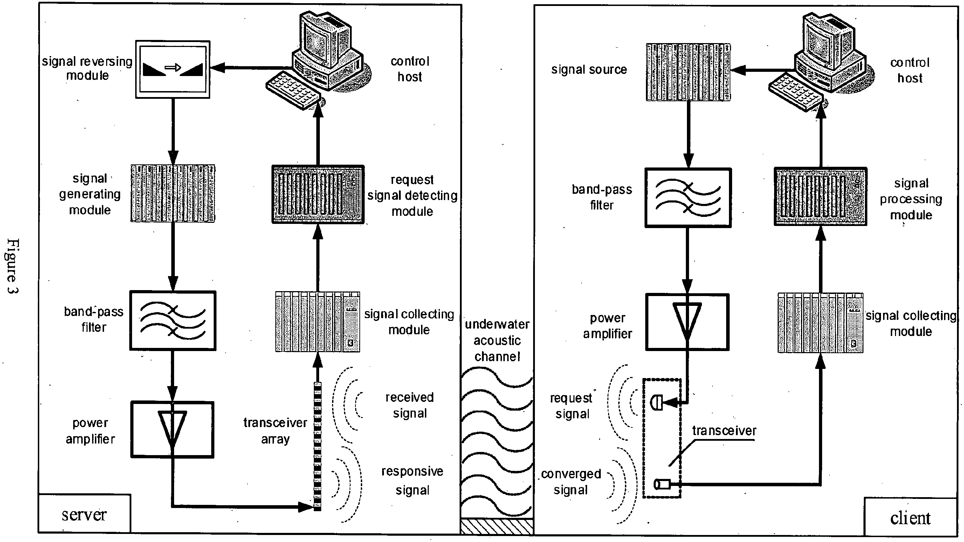

As shown in Figure 3, the client are mainly composed of a signal source, a band-pass filter, a power amplifier, a one-element transceiver, a signal collecting module, a signal processing module and a control host. Functions of the above components of the client will be briefly described as follows:

The control host includes a local clock, which is subject to travel time error and so needs to be calibrated. The control host controls the entire procedure of the timing processing on the client side, which includes: controlling the signal source to start digital-analog conversion; controlling the signal collecting module to start analog-digital conversion; receiving the results from the signal processing module; and calculating a local clock error.

The signal source generates a timing request signal, and starts digital-analog conversion under the control of the control host, and then outputs the analog signals to the band-pass filter.

The band-pass filter is used for filtering the transmission signals; the power amplifier is used for amplifying the power of the transmission signals.

The one-element transceiver has functions of both signal transmission and signal reception, thereby realizing conversion between electrical and acoustic signals.

The signal collecting module starts analog-digital conversion and data collecting of the received signals under the control of the control host, and then transmitting the collected data to the signal processing module.

The signal processing module receives the collected data from the signal collecting module, to detect the responsive signal sent back from the server and then process the signal to obtain a time reference signal. In addition, the signal processing module records the time corresponding to the time reference signal, and demodulates the transmission time of the responsive signal from the server, and then sends the results to the control host.

As shown in Figure 3, the server side is mainly composed of a control host, a request signal detecting module, a signal collecting module, transceiver array, a signal reversing module, a signal generating module, a band-pass filter and a power amplifier. Functions of the above components of the server side will be briefly described as followings:

The control host consists of a time reference clock, which provides accurate UTC time. The control host controls the entire procedure of the timing processing on the server side, which includes: controlling the signal collecting module to start analog-digital conversion, receiving the detected results from the request signal detecting module, determining the transmission time of the responsive signal according to the arrival time of the request signal of each path, submitting the transmission time of the responsive signal to the signal generating module, and determining parameters about the interception time interval of the received signal of each path and submitting the same to the signal reversing module; controlling the signal generating module to start digital-analog conversion.

Functions of the band-pass filter, the power amplifier and the signal collecting module of the server are the same as those of the client side.

The request signal detecting module receives the collected data from the signal collecting module, to detect the timing request signal from the client side, and then transmits the detected results, which includes the arrival time of the timing request signal of each path to the control host.

The signal reversing module conducts time reversing of the received signal of each path under the control of the control host, and then submits the time reversed signal to the signal generating module. In practice, before conducting time reversal of the received signal, intercepting the corresponding part of the received signal of each path may be performed under the control of the control host.

The signal generating module conducts gain control of the time reversed signal of each path sent from the signal reversing module to obtain the responsive signal of each path, starts digital to analog conversion under the control of the control host, and then outputs the result to the band-pass filter; at the same time, receives the transmission time of the responsive signal from the control host, code-modulates the information about the transmission time to obtain a communication signal and outputs the communication signal to the band-pass filter following the responsive signal.

The transceiver array consists of a number of transceivers arranged vertically, which have functions of both signal transmission and signal reception, thereby realizing the conversion between electrical signals and acoustic signals.

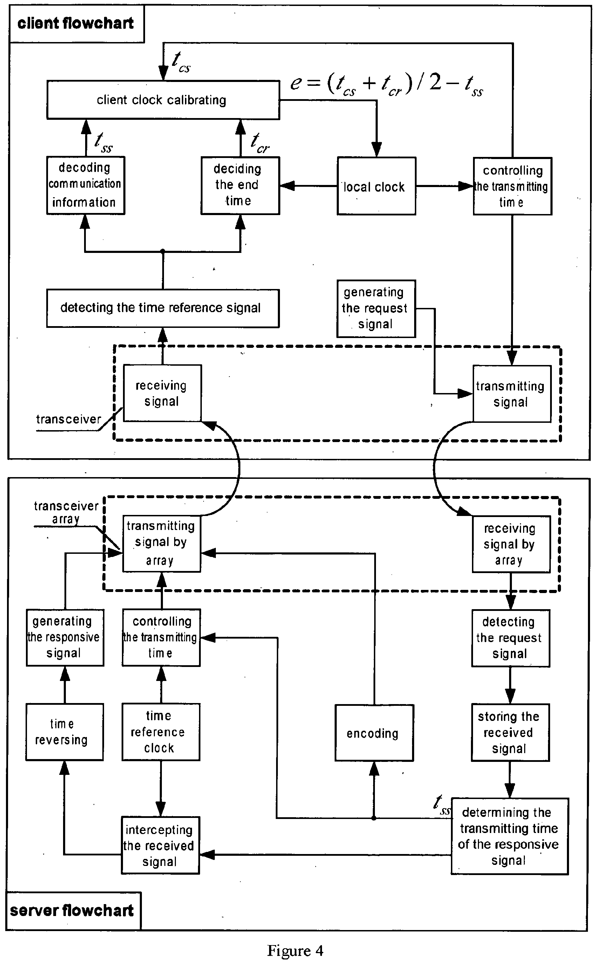

Figure 4 is flow chart of applying the present invention to an acoustic timing system. Detailed illustration of the process of acoustic timing will be described hereafter. For ease of explanation and without losing generality, the following assumptions are made:

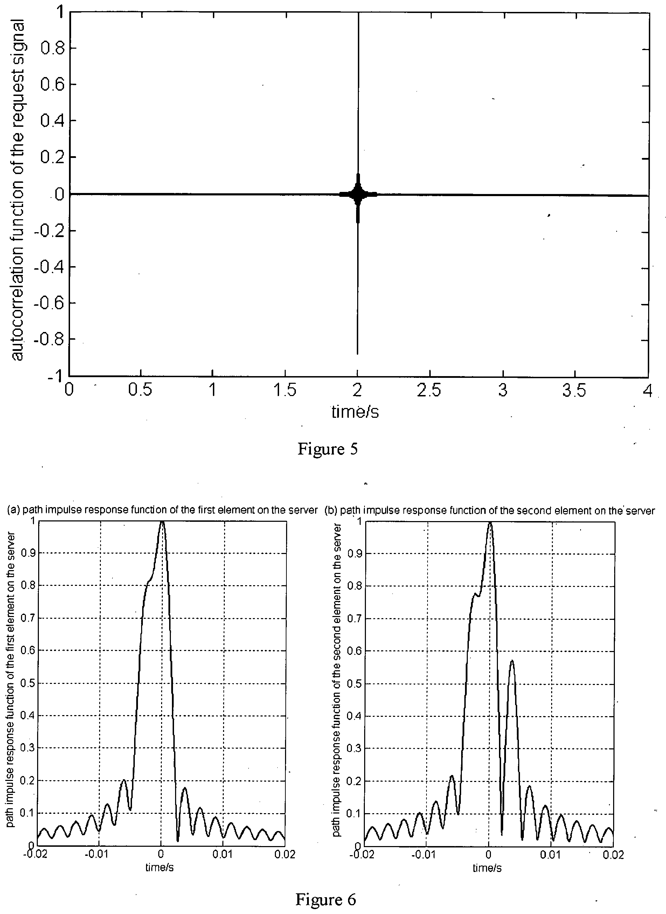

(1) In this embodiment, timing request signal $S_{cs}(t)$ is a linear FM signal, with duration $T_o$ being 2 seconds and a bandwidth of 400Hz. In practice, the type and parameters of the timing request signal can be flexibly adjusted according to different situations. As shown in figure 5, the autocorrelation function of the timing request signal $R_s(t)$ features a single peak similar to $\delta$-function.

(2) In this embodiment, the wet side of the server uses two elements (N = 2) to form the vertical array of transceivers. In practice, the number of elements can be flexibly adjusted according to different situations.

(3) In this embodiment, assuming that the error between the local clock of the client and time reference clock of the server, is 1 second. Because timing process lasts for a short period, it is regarded that the error in timing process remains the same; the client begins transmitting the timing request signal at local time 12:00 on a particular day (the actual UTC time is 11:59:59) to start a timing process; the server initiates at 11:50:00 of the UTC time according to advanced agreement, to be ready for providing service.

(4) In this embodiment, it is assumed that it takes 10 seconds and 10.1 seconds separately for the propagation of sound in the acoustic paths between the one-element transceiver of the client and the first element and the second element of the transceiver array on the server. The impulse response functions of the analog paths of the above acoustic paths are shown in Figure 6(a) and 6(b) separately. Additionally it is assumed that the response feature of the paths during the timing process remains unchanged.

The working flow of an acoustic timing system based on TRMRT method is described as follows:

(1) Firstly, the server initiates by being supplied power to be ready for providing service, whose detailed procedure includes: the control host initiates the signal collecting module to perform analog-digital conversion at 11:50:00 (UTC time) and establishes a time reference for collecting data; initiates the request signal detecting module to constantly detect whether a timing request signal has arrived in the received signal of each path sent from the client by performing sliding correlation to the original signal and the received signal,

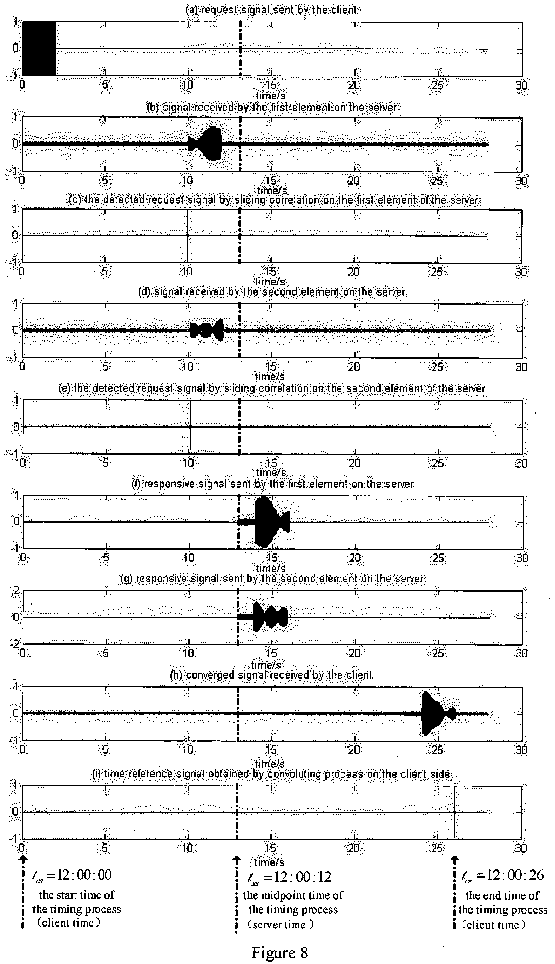

(2) The client generates a timing request signal $S_{cs}(t)$ in advance. When the local time arrives 12:00:00(UTC time 11:59:59), the client starts a timing process, in which the control host controls the signal source to start digital-analog conversion, and transmits the generated request signal by a transmission transceiver after being filtered by the band-pass filter and being amplified by the power amplifier, as shown in Figure 8 (a), and records 12:00:00 as the local time of transmitting the request signal $t_{cs}$.

(3) After finishing the transmission of the request signal $S_{cs}(t)$, the client starts to detect the responsive signal sent back from the server, whose detailed procedure includes:

the control host initiates the signal collecting module at local time 12:00:05 (UTC time 12:00:04) for performing analog-digital conversion, and establishes a time reference for collecting data; and initiates the signal processing module to constantly detect whether a responsive signal has arrived in the received signal sent back from the server by using sliding convolution to the original request signal and the received signal.

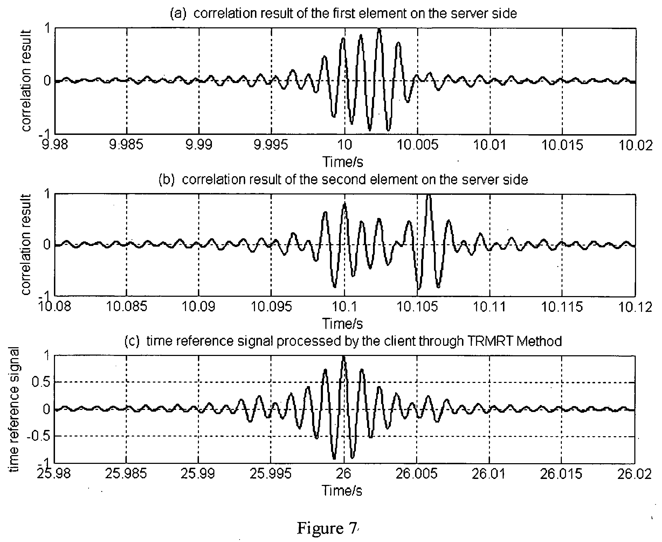

(4) The timing request signal sent from the client arrives at the first element and the second element of the transceiver array after 10 seconds and 10.1 seconds separately after propagation through the underwater acoustic path, which are the received signal as described previously $S_{sr}^1(t)$ and $S_{sr}^2(t)$, as shown in Figure 8 (b) and (d). The request signal detection module on the server side detects the request signal sent from the client by applying sliding correlating to the original request signal and the received signal of each path, respectively, as shown in Figure 8 (c) and (e), and according to the peak position of the detected signal to determine the arrival of the request signal of each path. Due to multi-path interference, in a unified time coordinate system, the measured results of arrivals are $T_a^1 = 10.0024$ seconds and $T_a^2 = 10.1058$ seconds respectively, which have 2.4 and 5.8 ms of measurement error respectively, as shown in Figure 7 (a) and (b). For conventional methods, it is necessary to use complex multi-path signal processing methods to reduce measurement error, otherwise it will lead to larger timing error; but for the present method, it is not necessary to accurately measure the arrival of the request signal because measurement error has no effect on the timing accuracy based on the present method as can be seen hereafter. The request signal detecting module submits the measurement results about the arrival $T_a^1$ and $T_a^2$ to the control host.

(5) The control host of the server side, according to the arrival $T_a^1 = 10.0024$ seconds, $T_a^2 = 10.1058$ seconds of the request signals of two paths which are measured by the request signal detecting module, separately selects $T_d^1 = 2.9976$ seconds, $T_d^2 = 2.8942$ seconds. In a unified time coordinate system, signal intercept intervals can be determined respectively, which are $[T_a^1 \quad T_a^1 + T_d^1]$ and $[T_a^2 \quad T_a^2 + T_d^2]$ for the two paths, and thereby the responsive signals containing the main multi-path information of the received signals $S_{sr}^1(t)$ and $S_{sr}^2(t)$, and ensuring the start times of generating the responsive signals, of all paths, are aligned to $T_s = T_a^1 + T_d^1 = T_a^2 + T_d^2 = 13$ seconds, wherein $T_s$ is the transmission time of the responsive signal of each path in a unified time coordinate system, corresponding the clock time of the server side $t_{ss}$ = 12:00:12 (UTC time). The control host submits the intercept interval parameters of each path to the signal reversing module, which intercepts received signal within corresponding time range of each path, carries out time reversing of the intercepted signal and then submits the resulted signal to the signal generating module. The signal generating module performs gain control processing of the time reversed signal of each path, to obtain the responsive signal $S_{ss}^1(t)$ and $S_{ss}^2(t)$ of each path, as shown in Figure 8 (f) and (g); and under the control of the control host, the signal generating module initiates digital to analog conversion when the transmission time $t_{ss}$ =12:00:12 of the responsive signal arrives, to transmit the responsive signal of each path simultaneously after being filtered by the band-pass filter and amplified by the power amplifier.

(6) the control host of the server side reads the local reference clock time $t_{ss}$ = 12:00:12 (UTC time) corresponding the transmission time of the responsive signal, and submits it to the signal generating module, which code-modulates the signal to obtain a communication signal, the communication signal being sent out by the transmission array after being filtered by the band-pass filter and amplified by the power amplifier immediately following the responsive signal.

(7) The responsive signals, which are sent from array element 1 and array element 2 of the server side, are propagated by underwater acoustic path and are converged to the client. The converged signal received by the client is $S_{cr}(t)$, as shown in Figure 8 (h). The signal processing module of the client side applies sliding convoluting processing to the original request signal and received signals, to detect the responsive signals and get time reference signal $R(t)$, as shown in Figure 8 (i), the details thereof are shown in Figure 7 (c). It can be seen that the time reference signal greatly eliminates multi-path interference and becomes into a single-peak signal with a high time resolution. Therefore, according to the peak position of the time reference signal, the end time of timing process can be accurately determined in the unified coordinate system, which is $T_r$=26 seconds. By reading the local clock time on the client side, $t_{cr}$ = 12:00:26, which is corresponding to the peak position can be obtained and then submitted to the control host.

(8) The signal processing module of the client side demodulates the communication signal immediately following the responsive signal, to obtain the transmission time of the responsive signal of the server $t_{ss}$ = 12:00:12, and then sends the results to the control host.

(9) The control host of the client side obtains the local clock time error, according to the start time of the timing process $t_{cs}$ = 12:00:00 with a travel time error, which is recorded by the local control host, the end time of the timing process $t_{cr}$ = 12:00:26, and the accurate midpoint time of the timing process $t_{ss}$ = 12:00:12 by decoding, i.e., the local clock error can be obtained from the below formula:

$$e = (t_{cs} + t_{cr})/2 - t_{ss} = 1 \text{ second}$$

According to the measured travel time error, the client calibrates the local clock, which corresponds to the end time of the timing process, from 12:00:26 to 12:00:25, so the local clock of the client is the same as the reference clock of the server, thus the timing process is finished.

It can be seen that the local clock error of the client measured by the present TRMRT method is the same as the pre-assumed error of the embodiment, that is to say, in this embodiment, accurate timing can be achieved by using the TRMRT method, however it is difficult to avoid multi-path interference by using conventional methods, such as described in step (4), which will bring a large timing error. Therefore, compared with conventional methods, the multi-path contamination at the client side is greatly reduced by TRM, and the TRMRT method has very good special and temporal focusing properties. So it can greatly improve the accuracy of timing.

From the above implemented example, we can draw conclusions as follows:

(1) In conventional underwater acoustic timing systems, both the server and the client must deal with multi-path problem of received signals, which causes the ambiguity of TOA. The TRMRT method avoids the multi-path problem at the server side by directly performing time reversing of received signal and then sending the signal. In addition, the multi-path contamination at the client side is greatly reduced by TRM. So this method can resolve the multi-path problem and improve the accuracy of timing.

(2) Compared with conventional UWATS systems, the technical solution of TRMRT is greatly simplified. At the server side, there is no need to measure TOA, no need to deal with multi-path problem; no need to accurately estimate the duration of multi-path structure; at the client side, the multi-path contamination is reduced, which makes the algorithm about TOA detection relatively simple.

Those skilled in the art should note that the above examples are only for the purpose of illustration of the technical solution of the present invention rather than bringing any limit to the present invention. While the present invention is described in details with reference to the above examples, those skilled in the art should understand that any alternative modification or replacement may be made, the scope of the present invention is defined by the following claims.

**Claims**

1. An underwater timing and synchronizing method, wherein acoustic information interaction is carried out between a base station server capable of providing time reference and an underwater platform client requiring time calibration, comprising the steps of:

(a) transmitting a request signal $S_{cs}(t)$ to said base station server and recording the time of a local clock of the client as $t_{cs}$, corresponding to said transmission time when said client needs to calibrate its clock; at the same time, establishing a unified time coordinate system for said base station server and said client, with said transmission time $t_{cs}$ as the start point of a timing process and as the origin of said coordinate system;

(b) said base station server performing time reversal processing of said request signal $S_{cs}(t)$ to obtain a responsive signal $S_{ss}^i(t)$ after receiving said request signal $S_{cs}(t)$;

(c) said base station server sending said responsive signal $S_{ss}^i(t)$ back to said client, and obtaining a communication signal by code-modulating the information about the transmission time $t_{ss}$ of said responsive signal $S_{ss}^i(t)$, thereafter sending said communication signal to said client by means of acoustic communication;

(d) said client convolving said received responsive signal $S_{ss}^i(t)$ and said request signal $S_{cs}(t)$ to obtain a time reference signal R(t), then measuring the end time $T_r$ of said timing process, and then calculating an error of the clock of said client by using a demodulated transmission time $t_{ss}$ of said responsive signal $S_{ss}^i(t)$ from said base station server, thereby realizing timing and synchronizing for said client.

2. The method according to claim 1, wherein said step (b) comprises:

(b1) said base station server receiving multi-path signal $S_{sr}^i(t)$ by a vertically arranged multi-element transceiver array after said request signal $S_{cs}(t)$ being propagated, $i$ = 1, 2,..., N, N is the number of array element of the base station server;

(b2) in said unified time coordinate system, said base station server aligning the transmission start time of said responsive signals of all the paths to $T_s$ by delaying for an appropriate time $T_d^i$, based on the arrival time $T_a^i$ of said received signals, wherein, the time length of $T_d^i$ is greater than the duration of said multi-path structure of said received signal $S_{sr}^i(t)$;

$$T_s = T_a^i + T_d^i \qquad\qquad (1)$$

(b3) carrying out time reversal processing of said received signal $S_{sr}^i(t)$ to obtain the responsive signal $S_{ss}^i(t)$ of the i-th path, with $T_s$ being used as the start time;

$$S_{ss}^i(t) = S_{sr}^i(T_r - t) \qquad\qquad (2)$$

wherein, $T_r = 2T_s$.

3.  The method according to claim 1, wherein, said step (c) comprises:

   (c1) at the time of $T_s$, all the paths of said'base station server performing gain control processing for said responsive signal $S_{ss}^i(t)$, and then sending it back to said client;

   (c2) said base station server reading and recording the local reference clock *time $t_{ss}$* corresponding to said transmission *time $t_{ss}$* of said responsive signal $S_{ss}^i(t)$, code-modulating said $t_{ss}$ to obtain said communication signal, and then sending said communication signal to said client by means of acoustic communication.

4.  The method according to claim 1, wherein said step (d) comprises:

   (d1) said client convolving signal $S_{cr}(t)$, which is obtained by converging said multi-path responsive signal $S_{ss}^i(t)$ to said client after being propagated, and the request signal $S_{cs}(t)$, to obtain said time reference signal $R(t)$,

$$R(t) = S_{cs}(t) \otimes S_{cr}(t) \qquad\qquad (3)$$

   and then determining said end time $T_r$ of said timing process based on the position of the peak of said signal R(t),

   (d2) said client reading and recording said local clock time $t_{cr}$ corresponding to said end time $T_r$, in addition, an acoustic communication equipment of said client demodulating said transmission time $t_{ss}$ of said responsive signal $S_{ss}^i(t)$ from said base station server, and then calculating said clock error of said client by considering said transmission time $t_{cs}$ of said request signal $S_{cs}(t)$ from said client,

$$e = (t_{cs} + t_{cr})/2 - t_{ss} \qquad\qquad (4)$$

   thereby realizing said timing and synchronizing for said client.

5.  The method according to claim 1, wherein said request signal $S_{cs}(t)$ is in the form of a wide-band acoustic signal.

6.  An underwater time service and synchronizing system adapted to perform acoustic information interaction , the system comprising a base station server capable of providing a time reference and an underwater platform client requiring time calibration, wherein:

   said client is composed of a dry side and a wet side, said wet side is a one-element transceiver having both functions of sending and receiving signals; said dry side including:

a local clock, adapted to read local time $t_{cs}$ corresponding to the transmission time of a request signal $S_{cs}(t)$ and local time $t_{cr}$ corresponding to the position of the peak of a time reference signal $R(t)$;

a request signal generating module, adapted to generate a request signal $S_{cs}(t)$ for timing and synchronizing, and to output said request signal $S_{cs}(t)$ to a signal transmitting module;

a signal transmitting module, for transmitting said request signal $S_{cs}(t)$ to said base station server by said one-element transceiver;

a signal receiving module, adapted to receive a responsive signal $S_{ss}^i(t)$ and a communication signal sent from said base station server by said one-element transceiver and to output said received signals to a signal processing module;

a signal processing module, configured to convolve said received responsive signal $S_{ss}^i(t)$ and said request signal $S_{cs}(t)$ to obtain said time reference signal R(t), and to measure an end time $T_r$ of the timing and synchronizing process, then to calculate a clock error of said client using the demodulated transmission time $t_{ss}$ of said responsive signal $S_{ss}^i(t)$ from said base station server to realize timing and synchronizing for said client;

said base station server is composed of a dry side and a wet side, said wet side is a multi-element transceiver array arranged vertically;

said dry side including:

a reference clock, adapted to provide a reference time;

a signal receiving module, adapted to receive multi-path signal $S_{sr}^i(t)$ after said request signal $S_{cs}(t)$ being propagated by each element of the multi-element transceiver array, $i$ = 1, 2, ..., N , N is the number of array elements of said base station server;

a signal processing module, adapted to perform time reversal processing of said request signal $S_{cs}(t)$ received by said base station server to obtain said responsive signal $S_{ss}^i(t)$, and to code-modulate the transmission time $t_{ss}$ of said responsive signal $S_{ss}^i(t)$ to obtain said communication signal;

a signal transmitting module, adapted to transmit said responsive signal $S_{ss}^i(t)$ and said communication signal to said client by said multi-element transceiver array.

7. The system according to claim 6, wherein, said signal processing module of said dry side of said base station server including:

a request signal detecting module, adapted to slide-correlate said multi-path signal $S_{sr}^i(t)$ which is outputted from said signal receiving module of said base station server with the request signal $S_{cs}(t)$, to determine whether there exists said request signal $S_{cs}(t)$ sent by said client in said received signal in each path;

a time reversal module, adapted to align the transmission start time of said responsive signal $S_{ss}^i(t)$ of all paths to $T_s$ by delaying for an appropriate time $T_d^i$ of said arrival time $T_a^i$ of the received signal,

$$T_s = T_a^i + T_d^i$$

wherein the length of $T_d^i$ is greater than the duration of said received signal of multi-path structure;

and to perform time reversal processing of said received signal $S_{sr}^i(t)$ of each path, with $T_s$ being set as the transmission start time of said responsive signal, to obtain the responsive signal $S_{ss}^i(t)$ of the i-th path in a unified time coordinate system,

$$S_{ss}^i(t) = S_{sr}^i(T_r - t)$$

wherein, $T_r = 2T_s$ ;
a responsive signal generating module, adapted to carry out gain control processing of said reversed signal of each path to obtain said responsive signal $S_{ss}^i(t)$ of each path, and to output said responsive signal $S_{ss}^i(t)$ of each path to said signal transmitting module of said dry side of said server;
an acoustic communication coding module, adapted to code-modulate the information about said transmission time $t_{ss}$ of said responsive signal $S_{ss}^i(t)$ to obtain a communication signal, and for outputting said communication signal to said signal transmitting module of said dry side of said server.

8. The system according to claim 6, wherein said signal processing module of said client including:

a time reference signal detecting module, adapted to detect said responsive signal $S_{ss}^i(t)$ sent back from said server, by performing sliding convolution of the request signal $S_{cs}(t)$ and said received responsive signal $S_{ss}^i(t)$ to detect whether there exists said responsive signal $S_{ss}^i(t)$ sent back by said server and obtain a time reference signal $R(t)$ ;

$$R(t) = S_{cs}(t) \otimes S_{cr}(t) \; ;$$

an acoustic communication decoding module, adapted to demodulate said transmission time $t_{ss}$ of said responsive signal $S_{ss}^i(t)$ sent from said communication signal from said server;
a clock error correcting module, adapted to calculate the error of said clock of said client according to below formula:

$$e = (t_{cs} + t_{cr}) / 2 - t_{ss}$$

9. The system according to claim 6, wherein, said request signal $S_{cs}(t)$ is in the form of a broadband acoustic signal.


**Patentansprüche**

1. Verfahren für Unterwasserzeitdienst und Synchronisation, worin akustische Informationsinteraktion zwischen einem zur Bereitstellung einer Zeitreferenz fähigen Basisstationsserver und einem zeitkalibrierungsbedürftigen Unterwasser-Plattformclient erfolgt, umfassend die folgenden Schritte:

(a) Übertragen eines Anforderungssignals $S_{cs}(t)$ an besagten Basisstationsserver und Aufzeichnen der Zeit einer lokalen Uhr des Clients als $t_{cs}$, entsprechend besagter Übertragungszeit, wenn besagter Client seine Uhr kalibrieren muss; gleichzeitig, Aufbauen eines vereinheitlichten Zeitkoordinatensystems für besagten Basisstationsserver und besagten Client, mit besagter Übertragungszeit $t_{cs}$ als Ausgangspunkt eines Zeitnahmevorgangs und als Ursprung des besagten Koordinatensystems;
(b) dass besagter Basisstationsserver die Zeitumkehrverarbeitung des besagten Anforderungssignals $S_{cs}(t)$ durchführt, um ein Antwortsignal $S^i_{ss}(t)$ nach Empfang des besagten Anforderungssignals $S_{cs}(t)$ zu erhalten;
(c) dass besagter Basisstationsserver besagtes Antwortsignal $S^i_{ss}(t)$ zurück an besagten Client sendet und ein Kommunikationssignal durch Codemodulieren der Informationen über die Übertragungszeit $t_{ss}$ des besagten Antwortsignals $S^i_{ss}(t)$ erhält und danach besagtes Kommunikationssignal an besagten Client mittels akustischer Kommunikation sendet;
(d) dass besagter Client besagtes empfangenes Antwortsignal $S^i_{ss}(t)$ und besagtes Anforderungssignal $S_{cs}(t)$ konvolviert, um ein Zeitreferenzsignal $R(t)$ zu erhalten, dann die Endzeit $T_r$ von besagtem Zeitnahmevorgang misst und dann einen Fehler der Uhr des besagten Clients mithilfe einer demodulierten Übertragungszeit $t_{ss}$ des besagten Antwortsignals $S^i_{ss}(t)$ aus besagtem Basisstationsserver berechnet, wodurch Zeitdienst und Synchronisation für besagten Client realisiert werden.

2. Verfahren nach Anspruch 1, worin besagter Schritt (b) umfasst:

(b1) dass besagter Basisstationsserver ein Mehrwegesignal $S^i_{sr}(t)$ durch ein vertikal angeordnetes Multielement-Transceiver-Array nach Ausbreiten des besagten Anforderungssignals $S_{cs}(t)$ empfängt, wobei $i = 1, 2, ......, N$, $N$ die Nummer von Arrayelementen des Basisstationsservers ist;

(b2) dass, in besagtem vereinheitlichtem Zeitkoordinatensystem, besagter Basisstationsserver die Übertragungsstartzeit besagter Antwortsignale aller Wege zu $T_s$ durch Verzögern um eine angemessene Zeit $T^i_d$, basierend auf der Ankunftszeit $T^i_a$ besagter empfangener Signale, ausrichtet, worin die Zeitlänge von $T^i_d$ größer ist als die Dauer von besagter Mehrwegestruktur des besagten empfangenen Signals $S^i_{sr}(t)$;

$$T_s = T^i_a + T^i_d \qquad (1)$$

(b3) dass Zeitumkehrverarbeitung des besagten empfangenen Signals $S^i_{sr}(t)$ ausgeführt wird, um das Antwortsignal $S^i_{ss}(t)$ des i-ten Wegs zu erhalten, wobei $T_s$ als Startzeit benutzt wird;

wobei das Antwortsignal $S^i_{ss}(t)$ des i-ten Wegs mit $T_s$ als Startzeit benutzt wird;

$$S^i_{ss}(t) = S^i_{sr}(T_r - t) \qquad (2)$$

worin $T_r = 2T_s$.

3. Verfahren nach Anspruch 1, worin besagter Schritt (c) Folgendes umfasst:

(c1) dass, zur Zeit von $T_s$, alle Wege des besagten Basisstationsservers eine Verstärkungsregelungsverarbeitung für besagtes Antwortsignal $S^i_{ss}(t)$ durchführen und es dann an besagten Client zurücksenden;

(c2) dass besagter Basisstationsserver die lokale Referenzuhrzeit $t_{ss}$ entsprechend besagter Übertragungszeit $t_{ss}$ des besagten Antwortsignals $S^i_{ss}(t)$ liest und aufzeichnet, wobei besagte $t_{ss}$ codemoduliert wird, um besagtes Kommunikationssignal zu erhalten, und dann besagtes Kommunikationssignal an besagten Client mithilfe von akustischer Kommunikation gesendet wird.

4. Verfahren nach Anspruch 1, worin besagter Schritt (d) Folgendes umfasst:

(d1) dass besagter Client ein Signal $S_{cr}(t)$, das durch Konvergieren des besagten Mehrwege-Antwortsignals $S^i_{ss}(t)$ zu besagtem Client nach dem Ausbreiten erhalten wird, und das Anforderungssignal $S_{cs}(t)$ konvolviert, um besagtes Zeitreferenzsignal $R(t)$

$$R(t) = S_{cs}(t) \otimes S_{cr}(t) \qquad (3)$$

zu erhalten, und anschließendes Bestimmen von besagter Endzeit $T_r$ von besagtem Zeitnahmevorgang basierend auf der Position der Spitze von besagtem Signal R(t),

(d2) dass besagter Client besagte lokale Uhrzeit $t_{cr}$ entsprechend besagter Endzeit $T_r$ liest und aufzeichnet, außerdem ein akustisches Kommunikationsgerät des besagten Clients besagte Übertragungszeit $t_{ss}$ des besagten Antwortsignals $S^i_{ss}(t)$ aus besagtem Basisstationsserver demoduliert, und dann besagter Uhrfehler des besagten Clients durch Berücksichtigung besagter Übertragungszeit $t_{cs}$ des besagten Anforderungssignals $S_{cs}(t)$ aus besagtem Client

$$e = (t_{cs} + t_{cr})/2 - t_{ss} \qquad (4)$$

berechnet wird, wodurch besagter Zeitdienst und Synchronisation für besagten Client realisiert werden.

5. Verfahren nach Anspruch 1, worin besagtes Anforderungssignal $S_a(t)$ in Form eines akustischen Breitbandsignals vorliegt.

6. System für Unterwasserzeitdienst und Synchronisation, das dafür ausgelegt ist, akustische Informationsinteraktion durchzuführen, wobei das System einen zur Bereitstellung einer Zeitreferenz fähigen Basisstationsserver und einen zeitkalibrierungsbedürftigen Unterwasser-Plattformclient umfasst, worin:

besagter Client aus einer trockenen Seite und einer nassen Seite besteht, wobei besagte nasse Seite ein beide Funktionen des Sendens und Empfangens von Signalen wahrnehmender Einzelelement-Transceiver ist; wobei besagte trockene Seite Folgendes beinhaltet:

eine lokale Uhr, die dafür ausgelegt ist, lokale Zeit $t_{cs}$ entsprechend der Übertragungszeit eines Anforderungssignals $S_{cs}(t)$ und lokale Zeit $t_{cr}$ entsprechend der Position der Spitze eines Zeitreferenzsignals $R(t)$ zu lesen;

ein anforderungssignalerzeugendes Modul, das dafür ausgelegt ist, ein Anforderungssignal $S_{cs}(t)$ für Zeitdienst und Synchronisation zu erzeugen und besagtes Anforderungssignal $S_{cs}(t)$ an ein Signalübertragungsmodul auszugeben;

ein Signalübertragungsmodul zum Übertragen des besagten Anforderungssignals $S_{cs}(t)$ an besagten Basisstationsserver durch besagten Einzelelement-Transceiver;

ein Signalempfangsmodul, das dafür ausgelegt ist, ein Antwortsignal $S^i_{ss}(t)$ und ein Kommunikationssignal, die von besagtem Basisstationsserver durch besagten Einzelelement-Transceiver gesendet werden, zu empfangen und besagte empfangene Signale an ein Signalverarbeitungsmodul auszugeben;

ein Signalverarbeitungsmodul, das dafür konfiguriert ist, besagtes empfangenes Antwortsignal $S^i_{ss}(t)$ und besagtes Anforderungssignal $S_{cs}(t)$ zu konvolvieren, um besagtes Zeitreferenzsignal R(t) zu erhalten, und eine Endzeit $T_r$ des Zeitdienst- und Synchronisationsprozesses zu messen, dann einen Uhrfehler des besagten Clients mithilfe der demodulierten Übertragungszeit $t_{ss}$ des besagten Antwortsignals $S^i_{ss}(t)$ aus besagtem Basisstationsserver zu berechnen, um Zeitdienst und Synchronisation für besagten Client zu realisieren;

besagter Basisstationsserver aus einer trockenen Seite und einer nassen Seite besteht, wobei besagte nasse Seite ein vertikal angeordnetes Multielement-Transceiver-Array ist;

wobei besagte trockene Seite Folgendes beinhaltet:

eine Referenzuhr, die dafür ausgelegt ist, eine Referenzzeit bereitzustellen;

ein Signalempfangsmodul, das dafür ausgelegt ist, ein Mehrwegesignal $S^i_{sr}(t)$ nach Ausbreiten des besagten Anforderungssignals $S_{cs}(t)$ durch jedes Element des Multielement-Transceiver-Arrays zu empfangen, wobei $i$ = 1, 2, ....., N, N die Nummer von Arrayelementen von besagtem Basisstationsserver ist;

ein Signalverarbeitungsmodul, das dafür ausgelegt ist, Zeitumkehrverarbeitung des von besagtem Basisstationsserver empfangenen besagten Anforderungssignals $S_{cs}(t)$ durchzuführen, um besagtes Antwortsignal $S^i_{ss}(t)$ zu erhalten, und die Übertragungszeit $t_{ss}$ des besagten Antwortsignals $S^i_{ss}(t)$ zu codemodulieren, um besagtes Kommunikationssignal zu erhalten;

ein Signalübertragungsmodul, das dafür ausgelegt ist, besagtes Antwortsignal $S^i_{ss}(t)$ und besagtes Kommunikationssignal an besagten Client durch besagtes Multielement-Transceiver-Array zu übertragen.

**7.** System nach Anspruch 6, worin besagtes Signalverarbeitungsmodul von besagter trockener Seite von besagtem Basisstationsserver Folgendes beinhaltet:

ein Anforderungssignal-Detektionsmodul, das dafür ausgelegt ist, besagtes Mehrwegesignal $S^i_{sr}(t)$ gleitend zu korrelieren, das von besagtem Signalempfangsmodul des besagten Basisstationsservers mit dem Anforderungssignal $S_{cs}(t)$ ausgegeben wird, um zu bestimmen, ob besagtes Anforderungssignal $S_{cs}(t)$ existiert, das von besagtem Client in besagtem empfangenen Signal in jedem Weg gesendet wurde;

ein Zeitumkehrmodul, das dafür ausgelegt ist, die Übertragungsstartzeit des besagten Antwortsignals $S^i_{ss}(t)$ aller Wege zu $T_s$ durch Verzögern um eine angemessene Zeit $T^i_d$ der besagten Ankunftszeit $T^i_a$ des empfangenen Signals

$$ T_s = T^i_a + T^i_d $$

auszurichten, worin die Länge von $T^i_d$ größer als die Dauer des besagten empfangenen Signals der Mehrwegestruktur ist;

und Zeitumkehrverarbeitung des besagten empfangenen Signals $S^i_{sr}(t)$ jedes Wegs durchzuführen, wobei $T_s$

als Übertragungsstartzeit des besagten Antwortsignals festgelegt ist, um das Antwortsignal $S^i_{ss}(t)$ des i-ten Wegs in einem vereinheitlichten Zeitkoordinatensystem

$$S^i_{ss}(t) = S^i_{sr}(T_r - t)$$

zu erhalten, worin $T_r = 2T_s$;

ein antwortsignalerzeugendes Modul, das dafür ausgelegt ist, Verstärkungsregelungsverarbeitung des besagten zeitumgekehrten Signals jedes Wegs auszuführen, um besagtes Antwortsignal $S^i_{ss}(t)$ jedes Wegs zu erhalten, und besagtes Antwortsignal $S^i_{ss}(t)$ jedes Wegs an besagtes Signalübertragungsmodul von besagter trockener Seite des besagten Servers auszugeben;

ein akustisches Kommunikations-Codiermodul, das dafür ausgelegt ist, die Informationen über besagte Übertragungszeit $t_{ss}$ des besagten Antwortsignals $S^i_{ss}(t)$ zu codemodulieren, um ein Kommunikationssignal zu erhalten, und besagtes Kommunikationssignal an besagtes Signalübertragungsmodul von besagter trockener Seite des besagten Servers auszugeben.

8. System nach Anspruch 6, worin besagtes Signalverarbeitungsmodul von besagtem Client Folgendes beinhaltet:

ein Zeitreferenzsignal-Detektionsmodul, das dafür ausgelegt ist, besagtes Antwortsignal $S^i_{ss}(t)$, das von besagtem Server zurückgesendet wurde, zu detektieren, indem gleitende Konvolution des Anforderungssignals $S_{cs}(t)$ und besagten empfangenen Antwortsignals $S^i_{ss}(t)$ durchgeführt wird um zu detektieren, ob besagtes Antwortsignal $S^i_{ss}(t)$ existiert, das von besagtem Server zurückgesendet wurde, und ein Zeitreferenzsignal R(t)

$$R(t) = S_{cs}(t) \otimes S_{cr}(t) \; ;$$

zu erhalten;

ein akustisches Kommunikations-Decodiermodul, das dafür ausgelegt ist, besagte Übertragungszeit $t_{ss}$ des besagten Antwortsignals $S^i_{ss}(t)$, das aus besagtem Kommunikationssignal aus besagtem Server gesendet wurde, zu demodulieren;

ein Uhrfehler-Korrekturmodul, das dafür ausgelegt ist, den Fehler der besagten Uhr des besagten Clients gemäß nachstehender Formel zu berechnen:

9. System nach Anspruch 6, worin besagtes Anforderungssignal $S_{cs}(t)$ in Form eines akustischen Breitbandsignals vorliegt.

## Revendications

1. Procédé de temporisation et de synchronisation sous-marines, dans lequel une interaction d'information acoustique est réalisée entre un serveur de station de base capable de fournir une référence temporelle et un client de plateforme sous-marine exigeant un étalonnage temporel, comprenant les étapes consistant à :

(a) transmettre un signal de demande $S_{cs}(t)$ audit serveur de station de base et enregistrer le temps d'une horloge locale du client en tant que $t_{cs}$, correspond audit temps de transmission quand ledit client a besoin d'étalonner son horloge ; simultanément, établir un système unifié de coordonnées temporelles pour ledit serveur de station de base et ledit client, avec ledit temps de transmission $t_{cs}$ en tant que point de départ d'un processus de temporisation et en tant qu'origine dudit système de coordonnées ;

(b) ledit serveur de station de base effectuant un traitement d'inversion temporelle dudit signal de demande $S_{cs}(t)$ afin d'obtenir un signal de réponse $S^i_{ss}(t)$ après la réception dudit signal de demande $S_{cs}(t)$ ;

(c) ledit serveur de station de base renvoyant ledit signal de réponse $S^i_{ss}(t)$ audit client, et obtenant un signal de communication en modulant par codage l'information sur le temps de transmission $t_{ss}$ dudit signal de réponse $S^i_{ss}(t)$ puis envoyant ledit signal de communication audit client au moyen d'une communication acoustique ;

(d) ledit client effectuant une convolution dudit signal de réponse reçu $S^i_{ss}(t)$ et dudit signal de demande $S_{cs}(t)$ afin d'obtenir un signal de référence temporelle R(t), puis mesurant le temps de fin $T_r$ dudit processus de temporisation, puis calculant une erreur de l'horloge dudit client en utilisant un temps de transmission démodulé

$t_{ss}$ dudit signal de réponse $S^i_{ss}(t)$ provenant dudit serveur de station de base, réalisant ainsi une temporisation et une synchronisation dudit client.

2. Procédé selon la revendication 1, dans lequel l'étape (b) consiste à :

(b1) recevoir, par ledit serveur de station de base, un signal à trajets multiples $S^i_{sr}(t)$ par un ensemble d'émetteurs-récepteurs à plusieurs éléments agencés verticalement après la propagation dudit signal de demande $S_{cs}(t)$, avec $i$ = 1, 2, ..., $N$, où N est le nombre d'éléments que comporte l'ensemble du serveur de station de base ;
(b2) dans ledit système unifié de coordonnées temporelles, aligner, par ledit serveur de station de base, le temps de départ de transmission desdits signaux de réponse pour tous les trajets par rapport à $T_s$ en le retardant d'un temps approprié $T^i_d$, sur la base du temps d'arrivée $T^i_a$ desdits signaux reçus, la durée de $T^i_d$ étant supérieure à la durée de ladite structure à trajets multiples dudit signal reçu $S^i_{sr}(t)$ ;

$$T_s = T^i_a + T^i_d \qquad (1)$$

(b3) effectuer un traitement d'inversion temporelle dudit signal reçu $S^i_{sr}(t)$ afin d'obtenir le signal de réponse $S^i_{ss}(t)$ du $i^{ème}$ trajet, $T_s$ étant utilisé en tant que point de départ ;

$$S^i_{ss}(t) = S^i_{sr}(T_r - t) \qquad (2)$$

où $T_r$ = 2Ts.

3. Procédé selon la revendication 1, dans lequel l'étape (c) consiste à :

(c1) au temps $T_s$, soumettre ledit signal de réponse $S^i_{SS}(t)$ à un traitement de commande de gain pour tous les trajets dudit serveur de station de base, puis le renvoyer audit client ;
(c2) lire et enregistrer, par ledit serveur de station de base, le temps d'horloge de référence local $t_{ss}$ correspondant audit temps de transmission $t_{ss}$ dudit signal de réponse $S^i_{SS}(t)$, moduler par codage ledit $t_{ss}$ afin d'obtenir ledit signal de communication, puis envoyer ledit signal de communication audit client au moyen d'une communication acoustique.

4. Procédé selon la revendication 1, dans lequel l'étape (d) consiste à :

(d1) effectuer, par ledit client, une convolution du signal $S_{cr}(t)$, obtenu en convergeant ledit signal de réponse à plusieurs trajets $S^i_{ss}(t)$ vers ledit client après sa propagation, et du signal de demande $S_{cs}(t)$, afin d'obtenir ledit signal de référence temporelle R($t$),

$$R(t) = S_{cs}(t) \otimes S_{cr}(t) \qquad (3)$$

puis déterminer ledit temps de fin $T_r$ dudit processus de temporisation sur la base de la position du pic dudit signal R($t$) ;
(d2) lire et enregistrer, par ledit client, ledit temps d'horloge locale $t_{cr}$ correspondant audit temps de fin $T_r$, et, en outre, démoduler, par un équipement de communication acoustique dudit client, ledit temps de transmission $t_{ss}$ dudit signal de réponse $S^i_{ss}(t)$ provenant dudit serveur de station de base, puis calculer ladite erreur d'horloge dudit client en prenant en compte ledit temps de transmission $t_{cs}$ dudit signal de demande $S_{es}(t)$ provenant dudit client,

$$e = (t_{cs} + t_{cr}) / 2 - t_{ss} \qquad (4)$$

de manière à réaliser ladite temporisation et synchronisation dudit client.

**5.** Procédé selon la revendication 1, dans lequel ledit signal de demande $S_a(t)$ se présente sous la forme d'un signal acoustique à large bande.

**6.** Système de temporisation et de synchronisation sous-marines conçu pour effectuer une interaction d'information acoustique, le système comprenant un serveur de station de base capable de fournir une référence temporelle et un client de plateforme sous-marine exigeant un étalonnage temporel, dans lequel :

ledit client est composé d'un côté sec et d'un côté humide, ledit côté humide étant un émetteur-récepteur à un seul élément ayant deux fonctions d'envoi et de réception de signaux ;
ledit côté sec comprenant :

une horloge locale, conçue pour lire un temps local $t_{cs}$ correspondant au temps de transmission d'un signal de demande $S_{cs}(t)$, et un temps local $t_{cr}$ correspondant à la position du pic d'un signal de référence temporelle $R(t)$ ;
un module de production de signal de demande, conçu pour produire un signal de demande $S_{cs}(t)$ pour la temporisation et la synchronisation, et pour envoyer ledit signal de demande $S_{cs}(t)$ à un module de transmission de signal ;
un module de transmission de signal, permettant de transmettre ledit signal de demande $S_{cs}(t)$ audit serveur de station de base par ledit émetteur-récepteur à un seul élément ;
un module de réception de signal, conçu pour recevoir un signal de réponse $S^i_{ss}(t)$ et un signal de communication envoyé depuis ledit serveur de station de base par ledit émetteur-récepteur à un seul élément, et pour envoyer lesdits signaux reçus à un module de traitement de signal ;
un module de traitement de signal, conçu pour effectuer une convolution dudit signal de réponse reçu $S^i_{ss}(t)$ et dudit signal de demande $S_{cs}(t)$ afin d'obtenir ledit signal de référence temporelle $R(t)$, pour mesurer un temps de fin $T_r$ du processus de temporisation et de synchronisation, puis pour calculer une erreur d'horloge dudit client en utilisant le temps de transmission démodulé $t_{ss}$ dudit signal de réponse $S^i_{ss}(t)$ provenant dudit serveur de station de base afin de réaliser la temporisation et la synchronisation dudit client ;
ledit serveur de station de base étant composé d'un côté sec et d'un côté humide, ledit côté humide étant un ensemble d'émetteurs-récepteurs à plusieurs éléments agencés verticalement ;

ledit côté sec comprenant :

une horloge de référence, conçue pour fournir un temps de référence ;
un module de réception de signal, conçu pour recevoir un signal à trajets multiples $S^i_{sr}(t)$ après la propagation dudit signal de demande $S_{cs}(t)$ par chaque élément de l'ensemble d'émetteurs-récepteurs à plusieurs éléments, avec $i$ = 1, 2, ..., $N$, où $N$ est le nombre d'éléments que comporte l'ensemble dudit serveur de station de base ;
un module de traitement de signal, conçu pour effectuer un traitement d'inversion temporelle dudit signal de demande $S_{cs}(t)$ reçu par ledit serveur de station de base afin d'obtenir ledit signal de réponse $S^i_{ss}(t)$, et pour moduler par codage le temps de transmission $t_{ss}$ dudit signal de réponse $S^i_{ss}(t)$ afin d'obtenir ledit signal de communication ;
un module de transmission de signal, conçu pour transmettre ledit signal de réponse $S^i_{ss}(t)$ et ledit signal de communication audit client par ledit ensemble d'émetteurs-récepteurs à plusieurs éléments.

**7.** Système selon la revendication 6, dans lequel ledit module de traitement de signal dudit côté sec dudit serveur de station de base comprend :

un module de détection de signal de demande, conçu pour corréler par glissement ledit signal à trajets multiples $S^i_{sr}(t)$ émis par ledit module de réception de signal dudit serveur de station de base avec le signal de demande $S_{cs}(t)$, afin de déterminer s'il existe ledit signal de demande $S_{cs}(t)$ envoyé par ledit client dans ledit signal reçu dans chaque trajet ;
un module d'inversion temporelle, conçu pour aligner le temps de départ de transmission dudit signal de réponse $S^i_{ss}(t)$ de tous les trajets par rapport à $T_s$ en le retardant d'un temps approprié $T^i_d$ sur la base du temps d'arrivée $T^i_a$ du signal reçu,

$$T_s = T^i_a + T^i_d$$

la durée de $T^i_d$ étant supérieure à la dure dudit signal reçu de la structure à trajets multiples ;
et pour effectuer un traitement d'inversion temporelle dudit signal reçu $S^i_{sr}(t)$ de chaque trajet, $T_s$ étant défini en tant que temps de départ de transmission dudit signal de réponse, afin d'obtenir le signal de réponse $S^i_{ss}(t)$ du $i^{ème}$ trajet dans un système unifié de coordonnées temporelles,

$$S^i_{ss}(t) = S^i_{sr}(T_r - t)$$

où $T_r = 2T_S$ ;
un module de production de signal de réponse, conçu pour effectuer un traitement de commande de gain dudit signal à inversion temporelle de chaque trajet afin d'obtenir ledit signal de réponse $S^i_{ss}(t)$ de chaque trajet, et pour envoyer ledit signal de réponse $S^i_{ss}(t)$ de chaque trajet audit module de transmission de signal dudit côté sec dudit serveur ;
un module de codage de communication acoustique, conçu pour moduler par codage l'information sur ledit temps de transmission $t_{ss}$ dudit signal de réponse $S^i_{ss}(t)$ afin d'obtenir un signal de communication, et pour envoyer ledit signal de communication audit module de transmission de signal dudit côté sec dudit serveur.

8. Système selon la revendication 6, dans lequel ledit module de traitement de signal dudit client comprend :

un module de détection de signal de référence temporelle, conçu pour détecter ledit signal de réponse $S^i_{ss}(t)$ renvoyé par ledit serveur, en effectuant une convolution par glissement du signal de demande $S_{cs}(t)$ et dudit signal de réponse reçu $S^i_{ss}(t)$ afin de détecter s'il existe ledit signal de réponse $S^i_{ss}(t)$ renvoyé par ledit serveur, et d'obtenir un signal de référence temporelle $R(t)$ ;
un module de décodage de communication acoustique, conçu pour démoduler ledit temps de transmission $t_{ss}$ dudit signal de réponse $S^i_{ss}(t)$ envoyé depuis ledit signal de communication par ledit serveur ;
un module de correction d'erreur d'horloge, conçu pour calculer l'erreur de ladite horloge dudit client selon la formule suivante :

$$R(t) = S_{cs}(t) \otimes S_{cr}(t) ;$$

9. Système selon la revendication 6, dans lequel ledit signal de demande $S_{cs}(t)$ se présente sous la forme d'un signal acoustique à large bande.

Figure 1

Figure 2

Figure 3

**server**

signal reversing module

control host

signal generating module

request signal detecting module

band-pass filter

signal collecting module

power amplifier

transceiver array

received signal

responsive signal

underwater acoustic channel

**client**

signal source

control host

band-pass filter

signal processing module

power amplifier

signal collecting module

request signal

transceiver

converged signal

**client flowchart**

$$e = (t_{cs} + t_{cr})/2 - t_{ss}$$

$t_{cs}$

client clock calibrating

$t_{ss}$

decoding
communication
information

$t_{cr}$

deciding
the end
time

local clock

controlling
the transmitting
time

detecting the time reference signal

generating
the request
signal

receiving
signal

transmitting
signal

transceiver

transceiver
array

transmitting
signal by
array

receiving
signal by
array

generating
the responsive
signal

controlling
the transmitting
time

detecting
the request
signal

time
reversing

time
reference
clock

encoding

storing the
received
signal

intercepting
the received
signal

$t_{ss}$ determining the
transmitting time
of the responsive
signal

**server flowchart**

Figure 4

23

Figure 5

Figure 6

(a) correlation result of the first element on the server side

(b) correlation result of the second element on the server side

(c) time reference signal processed by the client through TRMRT Method

Figure 7

(a) request signal sent by the client

(b) signal received by the first element on the server

(c) the detected request signal by sliding correlation on the first element of the server

(d) signal received by the second element on the server

(e) the detected request signal by sliding correlation on the second element of the server

(f) responsive signal sent by the first element on the server

(g) responsive signal sent by the second element on the server

(h) converged signal received by the client

(i) time reference signal obtained by convoluting process on the client side

$t_{cr} = 12:00:00$

the start time of
the timing process
(client time)

$t_{ss} = 12:00:12$

the midpoint time of
the timing process
(server time)

$t_{cr} = 12:00:26$

the end time of
the timing process
(client time)

Figure 8

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5894450 A

- US 2005219950 A

**Non-patent literature cited in the description**

- **M. FIRK ; C. MADA.** Acoustic time reversal mirrors. *inverse problems,* 2001, vol. 17